# FASCICULE DE BREVET EUROPEEN

(11) **EP 2 949 578 B1**
(45) Date de publication et mention de la délivrance du brevet: **27.07.2016**
(21) Numéro de dépôt: 15001347.2
(22) Date de dépôt: 06.05.2015
(51) Int. Cl.: B64C 27/12, B64D 37/08, B64D 37/20, B64D 41/00

(54) **GIRAVION BIMOTEUR ÉQUIPÉ D'UNE INSTALLATION D'ALIMENTATION EN CARBURANT D'UN GROUPE DE MOTORISATION COMPRENANT UNE UNITÉ AUXILIAIRE DE PUISSANCE (APU)**
ZWEIMOTORIGES DREHFLÜGELFLUGZEUG, DAS MIT EINER KRAFTSTOFFZUFUHRANLAGE FÜR EINE TREIBWERKSEINHEIT AUSGESTATTET IST, DIE EIN HILFSTRIEBWERK (APU) UMFASST
TWIN-ENGINED ROTORCRAFT PROVIDED WITH A SYSTEM FOR SUPPLYING FUEL TO A POWER UNIT COMPRISING AN AUXILIARY POWER UNIT (APU)

(30) Priorité: 28.05.2014 FR 1401226
(43) Date de publication de la demande: 02.12.2015
(73) Titulaire: Airbus Helicopters, 13725 Marignane Cedex (FR)
(72) Inventeur: Bornes, Sylvain, F-13111 Coudoux (FR)
(74) Mandataire: GPI & Associés

(56) Documents cités:
- EP-A1- 2 524 871
- EP-A1- 2 567 896
- CA-A1- 2 831 706

## Description

La présente invention est du domaine des giravions et relève plus précisément des modalités d'approvisionnement en carburant d'un groupe de motorisation équipant un giravion.

La présente invention porte sur une architecture d'alimentation en carburant d'un groupe de motorisation multi-moteur d'un giravion, fournissant une puissance mécanique pour au moins l'entraînement d'au moins un rotor du giravion.

Les giravions sont des aéronefs à voilure(s) tournante(s) comportant un ou plusieurs rotors procurant au moins la sustentation du giravion, voire aussi sa propulsion et/ou son guidage en vol. Les giravions sont aussi équipés de divers organes auxiliaires consommateurs de puissance mécanique, tels que des compresseurs, des machines productrices d'énergie électrique et/ou une installation de ventilation, de chauffage et/ou de climatisation par exemple.

Dans ce contexte, les giravions sont équipés d'un groupe de motorisation comprenant un ou plusieurs moteurs à combustion, turbomoteur(s) notamment, dont un ou plusieurs moteurs principaux et un moteur auxiliaire communément désigné par APU (d'après l'acronyme anglais Auxiliary Power Unit). De tels giravions ont notamment été décrits par le Demandeur dans le document CA 2 831 706 A1.

Les moteurs principaux sont typiquement dimensionnés pour procurer la puissance mécanique nécessaire à l'entraînement des divers organes consommateurs de puissance mécanique du giravion en vol, dont notamment le ou les rotors et lesdits organes auxiliaires. A cet effet, au moins les moteurs principaux sont en prise sur une chaîne mécanique de transmission de puissance à partir de laquelle sont entraînés les divers organes du giravion consommateurs de puissance mécanique.

Le moteur auxiliaire est typiquement dimensionné pour procurer la puissance mécanique nécessaire à l'entraînement des organes auxiliaires lorsque le giravion est au sol. A cet effet, le moteur auxiliaire est en prise sur la chaîne mécanique de transmission de puissance en étant habituellement exclu d'une mise en prise mécanique avec le ou les rotors du giravion, compte tenu de son exploitation traditionnellement réservée à l'entraînement des organes auxiliaires hors situation de vol du giravion.

Selon une catégorie particulière de giravions, communément désignée par catégorie A, le groupe de motorisation comporte plusieurs moteurs principaux procurant simultanément la puissance mécanique nécessaire au giravion en vol. Les giravions de catégorie A peuvent survoler des territoires sensibles sous réserve de la capacité d'au moins un moteur principal à fournir à lui seul la puissance mécanique nécessaire au giravion en vol en cas de panne de l'un des moteurs principaux du groupe de motorisation.

Dans ce contexte, l'autorisation de survol d'un territoire sensible par un giravion de catégorie A est placée sous condition d'une séparation des moyens procurant aux moteurs principaux leur autonomie individuelle de fonctionnement. En effet, en cas de panne de l'un des moteurs principaux dont le fonctionnement est défectueux, au moins un autre moteur principal doit être apte à entraîner ledit au moins un rotor sans que son fonctionnement ne soit affecté par la panne du moteur principal défectueux.

Il en est notamment ainsi concernant les modalités d'approvisionnement en carburant des différents moteurs principaux du groupe de motorisation. A cette fin, les giravions de catégorie A sont typiquement équipés d'une installation d'alimentation en carburant du groupe de motorisation regroupant plusieurs ensembles d'alimentation en carburant respectivement affectés à l'alimentation individuelle en carburant des différents moteurs principaux.

Classiquement, les différents ensembles d'alimentation en carburant sont hydrauliquement isolés les uns des autres. Chaque ensemble d'alimentation en carburant comprend typiquement un réservoir à carburant, potentiellement composé d'une ou de plusieurs réserves de carburant en communication fluidique entre elles, et un circuit fluidique apte à acheminer le carburant depuis le réservoir vers le moteur principal qui lui est affecté.

L'alimentation individuelle en carburant des moteurs principaux est classiquement réalisée par l'intermédiaire de pompes principales entraînées par les moteurs principaux. Plus particulièrement en considérant un ensemble d'alimentation en carburant donné, le circuit fluidique comprend au moins une ou plusieurs conduites et une dite pompe principale entraînée par le moteur principal. La pompe principale aspire le carburant depuis le réservoir pour l'acheminer vers le moteur principal à travers un conduit d'alimentation du circuit fluidique.

Subsidiairement, les ensembles d'alimentation en carburant peuvent aussi comprendre chacun au moins une pompe de gavage plongée dans le réservoir pour refouler du carburant vers le moteur principal afin d'amorcer son démarrage.

Il se pose le problème d'un éventuel épuisement des réservoirs en carburant, pouvant par exemple être provoqué en raison d'une fuite de carburant hors d'un réservoir défectueux ou par suite de la consommation par le moteur principal affecté au réservoir de la totalité du carburant contenu initialement dans ce réservoir.

C'est pourquoi, il est courant d'équiper chacun des réservoirs d'une nourrice de capacité prédéfinie. Pour un ensemble d'alimentation en carburant donné, la nourrice ménage une réserve de carburant permettant un fonctionnement du moteur principal pendant une durée déterminée en cas d'épuisement du réservoir en carburant.

La nourrice est classiquement disposée à l'intérieur du réservoir à carburant et est alimentée en carburant par au moins une pompe de transfert. La ou les pompes de transfert acheminent en continu le carburant depuis le réservoir vers la nourrice, la nourrice étant munie d'un déversoir restituant le trop plein de carburant vers le réservoir.

Ces dispositions sont telles que la nourrice est maintenue pleine en carburant en l'absence d'un défaut de carburant à l'intérieur du réservoir. En cas d'épuisement du réservoir en carburant, le moteur principal dispose d'une autonomie de fonctionnement prédéfinie selon la capacité de la nourrice.

Le cas échéant et pour réduire le nombre d'organes hydrauliques mis en oeuvre par l'installation d'alimentation en carburant, la ou les pompes de transfert d'un même ensemble d'alimentation en carburant peuvent être en outre exploitées pour former lesdites pompes de gavage.

Il est aussi courant de ménager un circuit d'intercommunication entre les différents réservoirs de l'installation d'alimentation en carburant, pour permettre un échange de carburant entre les réservoirs en vue notamment d'équilibrer la répartition de la masse de carburant embarqué à bord du giravion. Sous réserve de l'activation d'un organe hydraulique intégré au circuit d'intercommunication, le carburant d'un réservoir peut être exploité pour maintenir une quantité de carburant disponible dans un autre réservoir ou tout au moins dans la nourrice affectée à cet autre réservoir.

Pour connaître un environnement technologique proche de la présente invention, on pourra par exemple se reporter au document EP 2 567 896 (EUROCOPTER) qui décrit une telle installation d'alimentation en carburant équipant un giravion bimoteur. Cependant, dans ce document, rien n'indique ni ne suggère d'utiliser un moteur auxiliaire supplémentaire aux deux moteurs principaux destinés à entrainer un rotor principal. Un tel document ne décrit donc pas une alimentation en carburant d'un tel moteur auxiliaire.

D'une manière générale, une recherche constante réside dans une simplification de l'organisation des équipements montés à bord des giravions, pour notamment réduire les coûts de conception, d'installation à bord et de maintenance desdits équipements, ainsi que pour réduire la masse globale des giravions.

Une telle recherche de simplification concerne entre autre les installations d'alimentation en carburant du groupe de motorisation d'un giravion, comme évoqué dans le document EP 2 567 896.

Cependant, une telle recherche de simplification doit s'inscrire dans le champ des contraintes de sécurisation en vol des giravions multi-moteur de catégorie A, notamment en cas d'épuisement en carburant de l'un des réservoirs et/ou en cas de panne de l'un des moteurs principaux.

Pour ce qui concerne le moteur auxiliaire, celui-ci peut disposer d'un ensemble auxiliaire d'alimentation en carburant dont l'architecture est simplifiée, compte tenu de sa fonction traditionnellement réservée à l'entraînement des organes auxiliaires lorsque le giravion est au sol. Une telle architecture simplifiée de l'ensemble auxiliaire d'alimentation en carburant permet notamment d'exploiter une unique pompe auxiliaire d'alimentation en carburant du moteur auxiliaire pouvant puiser le carburant depuis un réservoir à carburant spécifiquement dédié à l'alimentation en carburant du moteur auxiliaire, voire depuis l'un des réservoirs affecté à l'alimentation en carburant d'un moteur principal.

Il peut cependant être avantageux d'utiliser en outre le moteur auxiliaire en vol pour participer à l'entraînement du ou des rotors du giravion, en procurant un appoint de puissance mécanique dans des cas de vols particuliers pour lesquels il est requis une puissance mécanique conséquente, tel qu'en vol stationnaire, en phase de décollage ou d'atterrissage, voire encore en cas de panne de l'un des moteurs principaux par exemple.

Cependant dans ce cas, le moteur auxiliaire est maintenu en prise mécanique sur la chaîne principale de transmission de puissance pour participer, même marginalement, à l'entraînement du ou des rotors du giravion. Dans un tel contexte et dans le cadre des contraintes spécifiques aux giravions de catégorie A, le moteur auxiliaire doit pouvoir fonctionner de manière autonome en cas de panne de l'un des moteurs principaux, notamment en ce qui concerne les modalités d'alimentation en carburant du moteur auxiliaire.

Par ailleurs il est également connu, tel que décrit dans le document EP 2 524 871 A1, d'équiper un aéronef avec deux moteurs principaux et un moteur auxiliaire. Par ailleurs, un tel aéronef comporte deux réservoirs principaux permettant d'alimenter en carburant les deux moteurs principaux. Le moteur auxiliaire est quant à lui alimenté en carburant par un réservoir auxiliaire logé à l'intérieur de l'un des réservoirs principaux.

Cependant dans ce cas, les réservoirs principaux ne comportent pas de nourrice. Au surplus, la ou les pompes auxiliaires permettant d'alimenter en carburant le moteur auxiliaire sont logées dans un seul des réservoirs principaux.

Dans ce contexte, il est souhaitable de rechercher une solution pour permettre une implantation d'un ensemble d'alimentation en carburant réservé au moteur auxiliaire, s'inscrivant dans la recherche susvisée de simplification de l'architecture d'alimentation en carburant du groupe de motorisation tout en respectant les contraintes liées à l'approvisionnement en carburant des moteurs d'un giravion multi-moteur de catégorie A en prise mécanique avec le ou les rotors du giravion.

La présente invention s'inscrit dans la recherche d'une telle solution, sur la base du constat qui vient d'être fait et dont relève la démarche de la présente invention.

En effet dans le cadre d'une éventuelle participation du moteur auxiliaire à l'entraînement marginal du ou des rotors du giravion, les préjugés habituels dans le domaine de l'aéronautique doivent être surmontés pour proposer des modalités viables et sécurisées d'alimentation en carburant du moteur auxiliaire en évitant au mieux de complexifier l'architecture de l'installation d'alimentation en carburant du groupe de motorisation.

Il en ressort dans la pratique que de tels préjugés font obstacle à une exploitation du moteur auxiliaire pour participer marginalement à l'entraînement du ou des rotors d'un giravion multi-moteur de catégorie A, en raison de la complexification induite de l'architecture d'alimentation en carburant du groupe de motorisation.

La difficulté d'une telle démarche est notamment constatée dans le cas où ledit giravion multi-moteur est un giravion bimoteur, c'est-à-dire un giravion équipé d'un groupe de motorisation comprenant deux dits moteurs principaux à combustion dimensionnés chacun pour être aptes à entraîner individuellement le ou les rotors du giravion en vol en cas de panne de l'un des moteurs principaux.

En effet dans un tel contexte en cas de défection de l'un des moteurs principaux, un seul moteur principal est disponible pour procurer la puissance mécanique nécessaire au giravion pour son maintien en vol sous conditions de vol sécurisé, le moteur auxiliaire étant inapte à procurer seul un entraînement du ou des rotors du giravion.

La présente invention a pour objet un tel giravion bimoteur de catégorie A dont le groupe de motorisation comprend deux dits moteurs principaux à combustion et au moins un dit moteur auxiliaire tels que précédemment définis.

La présente invention a plus spécifiquement pour objet de proposer un tel giravion bimoteur de catégorie A équipé d'une installation d'alimentation en carburant des moteurs à combustion du groupe de motorisation.

L'organisation de ladite installation d'alimentation en carburant de la présente invention est recherchée viable sous conditions de vol sécurisé du giravion en cas de défection de l'un des moteurs principaux, dans le cadre d'une simplification des modalités d'alimentation en carburant du moteur auxiliaire. Il doit notamment être pris en compte les contraintes dont relèvent les giravions de catégorie A, compte tenu d'une participation du moteur auxiliaire pour procurer marginalement et/ou temporairement dans des phases de vol spécifiques du giravion un appoint de puissance mécanique participant à l'entraînement du ou des rotors du giravion.

Le giravion de la présente invention est un giravion bimoteur équipé d'une installation d'alimentation en carburant des moteurs à combustion d'un groupe de motorisation du giravion. Le groupe de motorisation fournit une puissance mécanique exploitée pour l'entraînement d'organes consommateurs de puissance mécanique du giravion par l'intermédiaire d'une chaîne de transmission de puissance mécanique.

Lesdits organes consommateurs de puissance mécanique comprennent au moins un rotor, dont au moins un rotor principal procurant au moins la sustentation du giravion. Lesdits organes consommateurs de puissance mécanique comprennent encore des organes auxiliaires excluant un quelconque rotor du giravion participant indifféremment isolément ou en combinaison à la sustentation, à la propulsion et/ou au guidage du giravion.

Par ailleurs le groupe de motorisation comprend deux moteurs principaux à combustion, dont les dimensionnements individuels confèrent aux moteurs principaux une aptitude à entraîner individuellement ledit au moins un rotor pendant une durée prédéfinie en cas de défection de l'un des moteurs principaux.

Le groupe de motorisation comprend encore au moins un moteur auxiliaire à combustion, dont le dimensionnement confère au moteur auxiliaire une aptitude à entraîner lesdits organes auxiliaires et une inaptitude à entraîner individuellement ledit au moins un rotor en phase de vol du giravion.

Par ailleurs encore, l'installation d'alimentation en carburant comprend des ensembles principaux d'alimentation en carburant distincts les uns des autres. De tels ensembles principaux d'alimentation en carburant distincts sont respectivement affectés aux moteurs principaux pour leur alimentation individuelle en carburant.

Chaque ensemble principal d'alimentation en carburant au moins comporte un unique réservoir principal de carburant et un circuit fluidique principal. Le circuit fluidique principal comprend au moins une pompe principale et est un circuit d'acheminement de carburant depuis une nourrice principale équipant le réservoir principal vers le moteur principal auquel est affecté l'ensemble principal d'alimentation en carburant considéré.

Selon une forme préférée de réalisation, la pompe principale d'un circuit fluidique principal considéré est notamment classiquement entraînée par le moteur principal approvisionné en carburant par ce circuit fluidique principal considéré.

Chaque ensemble principal d'alimentation en carburant comporte encore un circuit de transfert principal de carburant comprenant notamment au moins une pompe de transfert principale. Le circuit de transfert principal est un circuit d'acheminement de carburant depuis le réservoir principal vers la nourrice principale. Dans ce contexte tel que classiquement, la nourrice principale est munie d'un déversoir restituant un trop plein de carburant vers le réservoir principal.

Par ailleurs, l'installation d'alimentation en carburant comprend un ensemble auxiliaire d'alimentation en carburant comportant un circuit fluidique auxiliaire. Le circuit fluidique auxiliaire comprend au moins une pompe auxiliaire et est un circuit d'acheminement de carburant depuis les deux réservoirs principaux vers le moteur auxiliaire.

Dans ce contexte, il est fait le choix conformément à la démarche de la présente invention d'exploiter le moteur auxiliaire pour participer à l'entraînement dudit au moins un rotor, étant compris que le moteur auxiliaire est inapte à procurer seul un entraînement dudit au moins un rotor lorsque le giravion est en vol.

Dans le cadre de cette démarche, la présente invention propose d'alimenter le moteur auxiliaire en carburant à partir de l'un et l'autre des réservoirs principaux. En cas d'épuisement en carburant de l'un quelconque des réservoirs principaux, le moteur auxiliaire peut être maintenu alimenté en carburant par l'autre des réservoirs principaux.

Par suite, la mise en prise mécanique du moteur auxiliaire sur la chaîne cinématique d'entraînement du ou des rotors du giravion est viable tout en répondant à des conditions de vol sécurisé en cas d'épuisement en carburant de l'un des réservoirs principaux et cela en évitant une complexification économiquement rédhibitoire de l'installation d'alimentation en carburant du groupe de motorisation du giravion.

Plus particulièrement selon la présente invention, les réservoirs principaux logent chacun une dite pompe auxiliaire, le circuit fluidique auxiliaire étant un circuit d'acheminement de carburant vers le moteur auxiliaire depuis l'un et l'autre des réservoirs principaux par l'intermédiaire d'un conduit auxiliaire en communication fluidique conjointe avec l'une et l'autre des pompes auxiliaires respectivement logées dans les réservoirs principaux.

Les réservoirs principaux sont mutualisés pour former conjointement deux réserves de carburant distinctes aptes à permettre individuellement une alimentation du moteur auxiliaire en carburant par l'intermédiaire du circuit fluidique auxiliaire. En cas d'un épuisement en carburant de l'un quelconque des réservoirs principaux provoquant une défection du moteur principal alimenté en carburant à partir du réservoir principal épuisé en carburant, le moteur auxiliaire est maintenu approvisionné en carburant depuis l'autre réservoir principal.

L'architecture de l'ensemble auxiliaire d'alimentation est simplifiée en l'absence d'un réservoir à carburant spécifique au moteur auxiliaire, tout en étant apte à maintenir un approvisionnement en carburant du moteur auxiliaire en cas d'épuisement en carburant de l'un des réservoirs principaux et tout en répondant à des conditions de vol sécurisé du giravion, voire en optimisant de telles conditions de vol sécurisées en cas de défection de l'un des moteurs principaux par fourniture d'un appoint de puissance mécanique par le moteur auxiliaire pour notamment entraîner le ou les rotors du giravion.

Selon un agencement préféré du conduit auxiliaire, celui-ci comprend deux canaux auxiliaires amont en communication fluidique respectivement avec l'une et l'autre des pompes auxiliaires. Les canaux auxiliaires amont sont conjointement en communication fluidique avec un canal auxiliaire aval lui-même en communication fluidique avec le moteur auxiliaire.

Bien entendu selon une telle architecture du conduit auxiliaire, les notions amont et aval sont des notions relatives considérées dans le sens de circulation du carburant à travers le circuit fluidique depuis les pompes auxiliaires vers le moteur auxiliaire.

Chacun des deux dits canaux auxiliaires amont peut être avantageusement muni d'une valve anti-retour interdisant un passage de fluide de l'un à l'autre des réservoirs principaux. De tels agencements et aménagement du conduit auxiliaire permettent, à partir de modalités de structure simple, d'obtenir une stricte interdiction de passage de fluide de l'un à l'autre des réservoirs principaux par l'intermédiaire du circuit fluidique auxiliaire. De telles dispositions sont notamment utiles en cas d'épuisement en carburant de l'un des réservoirs principaux, pour interdire un passage d'air depuis un réservoir principal épuisé en carburant vers l'autre réservoir principal et/ou vers le moteur auxiliaire.

Subsidiairement et selon l'organisation propre des ensembles principaux d'alimentation en carburant, les circuits fluidiques principaux sont susceptibles de comporter chacun de telles valves anti-retour interdisant un tel passage d'air depuis les réservoirs principaux vers les moteurs principaux qui leur sont respectivement affectés.

Selon une forme simple de réalisation, les pompes auxiliaires sont placées en fond des réservoirs principaux qui leur sont respectivement affectés. Un tel placement des pompes auxiliaires en fond des réservoirs principaux exclue, de la composition de l'équipement de l'ensemble auxiliaire d'alimentation en carburant, une nourrice auxiliaire d'approvisionnement en carburant du moteur auxiliaire.

Cependant, il n'est pas à exclure la possibilité de pourvoir l'ensemble auxiliaire d'alimentation en carburant de nourrices à l'intérieur desquelles sont respectivement plongées les pompes auxiliaires. De telles dispositions procurent un fonctionnement autonome du moteur auxiliaire pendant une durée prédéfinie en cas d'épuisement en carburant de l'un et/ou l'autre des réservoirs principaux. Une telle durée prédéfinie est notamment d'une valeur identique à la durée prédéfinie d'autonomie des moteurs principaux en cas d'épuisement en carburant du réservoir principal qui leur est affecté.

Plus particulièrement selon une forme de réalisation, les pompes auxiliaires sont respectivement placées en fond des nourrices principales équipant respectivement l'un et l'autre des réservoirs principaux. Les capacités respectives des nourrices principales sont chacune aptes à procurer pendant une durée prédéfinie un approvisionnement en carburant à la fois du moteur auxiliaire et du moteur principal alimenté en carburant depuis la nourrice principale qui lui est affectée.

Il peut cependant être préféré de limiter la capacité individuelle des nourrices principales. Dans ce cas, il est proposé de pourvoir le circuit fluidique auxiliaire de nourrices auxiliaires respectivement affectées aux pompes auxiliaires.

Plus particulièrement selon une autre forme de réalisation, les pompes auxiliaires sont respectivement logées en fond de nourrices auxiliaires équipant respectivement l'un et l'autre des réservoirs principaux. Les nourrices auxiliaires sont chacune approvisionnées en carburant depuis le réservoir principal les logeant respectivement.

Les nourrices auxiliaires sont potentiellement approvisionnées en carburant depuis les réservoirs principaux les logeant respectivement par l'intermédiaire de circuits de transfert auxiliaires respectifs distincts des circuits de transfert principaux.

De tels circuits de transfert auxiliaires peuvent mettre classiquement en oeuvre chacun au moins une pompe de transfert auxiliaire acheminant le carburant, pour un circuit de transfert auxiliaire considéré, entre le réservoir principal et la nourrice auxiliaire logée dans ce réservoir principal. Subsidiairement, une telle pompe de transfert auxiliaire peut être dans ce cas avantageusement formée par la pompe auxiliaire d'un circuit de transfert auxiliaire considéré.

Cependant, il est proposé dans le cas où les pompes auxiliaires sont placées en fond de dites nourrices auxiliaires et toujours dans le cadre d'une recherche de simplification de l'architecture de l'installation d'alimentation en carburant du groupe de motorisation, de mutualiser le circuit de transfert principal et le circuit de transfert auxiliaire puisant le carburant dans un même réservoir principal pour alimenter conjointement la nourrice principale et la nourrice auxiliaire logées dans un même réservoir principal.

Plus particulièrement dans le cas où les pompes auxiliaires sont placées en fond de dites nourrices auxiliaires, il est avantageusement proposé d'approvisionner en carburant les nourrices auxiliaires depuis les réservoirs principaux les logeant respectivement par l'intermédiaire des circuits de transfert principaux avec lesquels les pompes auxiliaires sont en communication fluidique.

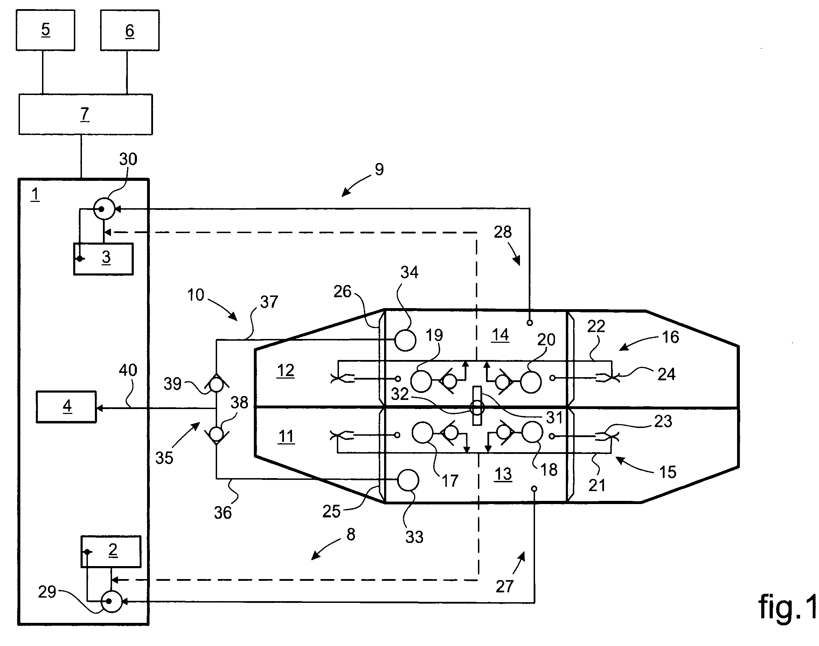

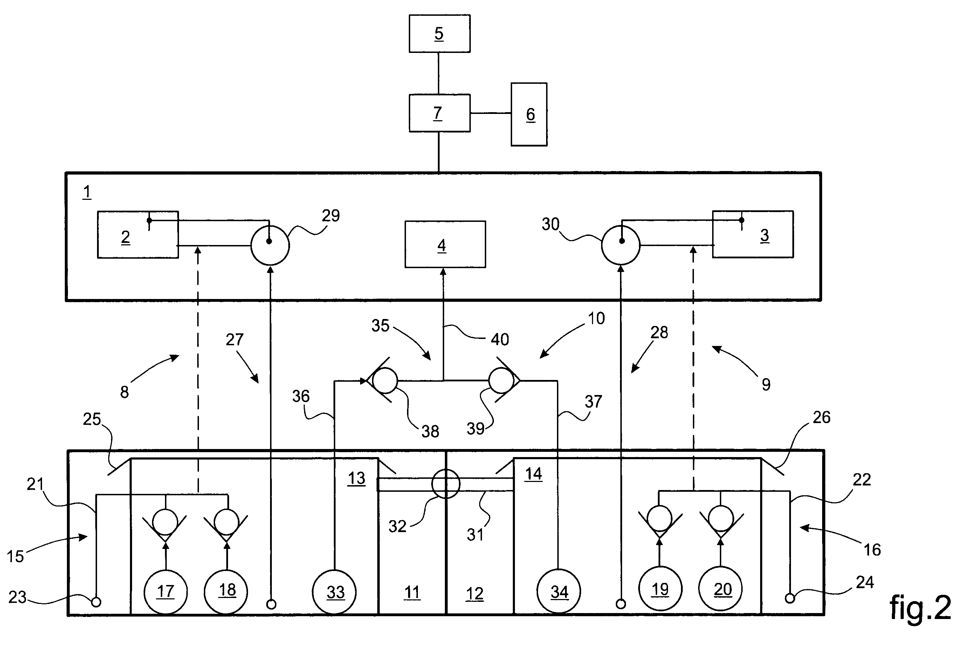

Un exemple de réalisation de la présente invention va être décrit en relation avec les figures des planches annexées, dans lesquelles les fig.1 et fig.2 sont des représentations schématiques d'une installation d'alimentation en carburant équipant un giravion bimoteur selon une forme préférée de réalisation de l'invention.

Sur la fig.1 et la fig.2, un giravion bimoteur comporte un groupe de motorisation 1 fournissant au giravion la puissance mécanique nécessaire à son fonctionnement. Le groupe de motorisation 1 comprend des moteurs principaux 2,3 à combustion et un moteur auxiliaire 4 à combustion alimentés en carburant au moyen d'une installation d'alimentation en carburant du groupe de motorisation 1.

Dans le cadre d'un giravion bimoteur, les moteurs principaux 2,3 sont au nombre de deux et sont typiquement chacun dimensionnés pour fournir isolément la puissance mécanique nécessaire à l'entraînement en vol d'au moins un rotor 5 du giravion.

Ledit rotor 5 est notamment un rotor communément désigné par rotor principal procurant typiquement au moins la sustentation du giravion, voire aussi sa propulsion et/ou son guidage en vol dans le cas spécifique d'un hélicoptère. Ledit rotor 5 est encore potentiellement, en complément du rotor principal, au moins un rotor annexe procurant le guidage en lacet du giravion voire aussi sa propulsion en translation dans le cas d'un hélicoptère à vitesses élevées d'avancement.

Le moteur auxiliaire 4 est dimensionné plus faiblement que chacun des moteurs principaux 2,3, en étant prioritairement affecté à l'entraînement d'organes auxiliaires 6 équipant le giravion et consommateurs de puissance mécanique. De tels organes auxiliaires comprennent typiquement des centrales hydrauliques, des compresseurs, une ou plusieurs machines génératrices de courant électrique et/ou une installation de ventilation, de chauffage et/ou de climatisation, voire encore des équipements de servitude par exemple.

Par distinction vis-à-vis des moteurs principaux 2,3, le dimensionnement du moteur auxiliaire 4 lui confère une faculté de production de puissance mécanique inapte à procurer seule un entraînement dudit au moins un rotor 5 lorsque le giravion est en vol. Cependant, le moteur auxiliaire 4 est avantageusement exploité pour participer en vol à l'entraînement dudit au moins un rotor 5 en fournissant, dans certaines phases de vol spécifiques du giravion, un appoint de puissance mécanique en complément de la puissance mécanique essentiellement fournie par les moteurs principaux 2,3.

Dans ce contexte, les moteurs principaux 2,3 et le moteur auxiliaire 4 sont en liaison mécanique avec une boîte principale 7 de transmission mécanique. Les différents organes du giravion 5,6 consommateurs de puissance mécanique sont typiquement entraînés à partir de la boîte principale 7 de transmission mécanique entraînée conjointement par les moteurs principaux 2,3 et par le moteur auxiliaire 4 dans certaines phases de vol pour lesquelles il est requis de procurer au giravion une puissance mécanique optimisée.

L'installation d'alimentation en carburant du groupe de motorisation 1 comprend plusieurs ensembles d'alimentation en carburant 8,9,10, dont des ensembles principaux d'alimentation en carburant 8,9 et un ensemble auxiliaire d'alimentation en carburant.

Les ensembles principaux d'alimentation en carburant 8,9 sont respectivement affectés à l'alimentation individuelle en carburant des moteurs principaux 2,3. L'ensemble auxiliaire d'alimentation en carburant est affecté à l'alimentation en carburant du moteur auxiliaire 4.

Chaque ensemble principal d'alimentation en carburant 8,9 comprend classiquement :
-) un réservoir principal 11,12 à carburant potentiellement composé de plusieurs réserves à carburant placées en communication fluidique entre elles,
-) une nourrice principale 13,14 logée dans le réservoir principal 11,12 et équipée d'un circuit de transfert 15,16 de carburant depuis le réservoir principal 11,12 vers la nourrice principale 13,14,
-) un circuit fluidique principal 27,28 comprenant une pompe principale 29,30 puisant le carburant depuis la nourrice principale 13,14 pour alimenter individuellement en carburant un moteur principal 2,3. Sur l'exemple de réalisation illustration illustré, la pompe principale 29,30 est typiquement entraînée par le moteur principal 2,3 alimenté en carburant par la pompe principale 29,30.

Sur l'exemple de réalisation illustré, lesdits circuits de transfert comprennent typiquement chacun au moins une pompe de transfert 17,18 ; 19,20 ainsi qu'une conduite de transfert 21,22 munie d'au moins un éjecteur 23,24 plongé dans les réservoirs principaux 11,12. Les pompes de transfert 17,18 ; 19,20 sont de préférence au nombre de deux et sont potentiellement exploitées pour former des pompes de gavage. Classiquement, de telles pompes de gavage sont exploitées pour alimenter en carburant les moteurs principaux 2,3 en vue d'amorcer leur démarrage, jusqu'à l'obtention d'un entraînement adéquat des pompes principales 29,30.

Les nourrices principales 13,14 sont chacune munies d'un déversoir 25,26 permettant d'évacuer le trop plein de carburant hors des nourrices principales 13,14 vers les réservoirs principaux 11,12. Un circuit d'intercommunication 31 est de préférence ménagé entre les nourrices principales 13,14 de l'un et l'autre des ensembles principaux d'alimentation en carburant 8,9, pour équilibrer les quantités de carburant respectivement contenues dans les réservoirs principaux 11,12.

Une tel circuit d'intercommunication 31 est typiquement mis en oeuvre sélectivement par activation d'un organe hydraulique de régulation 32 de l'échange de carburant entre les réservoirs principaux 11,12, voire plus spécifiquement entre les nourrices principales 13,14 tel qu'illustré sur les figures. Un tel organe hydraulique de régulation 32 est pilotable selon les besoins en étant par exemple constitué d'une vanne d'intercommunication ou d'une pompe d'intercommunication par exemple.

Dans ce contexte, il se pose le problème d'un éventuel épuisement en carburant de l'un des réservoirs principaux 11,12, voire de l'une des nourrices principales 13,14. Un tel épuisement est potentiellement induit en raison d'une fuite de carburant hors d'un réservoir principal 11,12 devenu défectueux. Classiquement en cas de panne et/ou de perte de l'alimentation en carburant de l'un des moteurs principaux 2,3, l'autre moteur principal 2,3 procure alors seul l'entraînement dudit au moins un rotor 5 pendant une durée prédéfinie déterminant la capacité individuelle des nourrices principales 13,14.

Cependant, le moteur auxiliaire 4 étant mécaniquement relié avec ledit au moins un rotor 5, l'alimentation en carburant du moteur auxiliaire 4 doit être maintenue en cas de panne de l'un quelconque des moteurs principaux 2,3 et/ou d'épuisement en carburant de l'un quelconque des réservoirs principaux 11,12.

Dans ce contexte, il est proposé une solution permettant un tel maintien de l'alimentation en carburant du moteur auxiliaire 4, sans pour autant complexifier outre mesure l'architecture de l'installation d'alimentation en carburant du groupe de motorisation 1 ni affecter la sécurisation en vol du giravion en cas de défection de l'un des moteurs principaux 2,3.

A cet effet sur l'exemple préféré de réalisation illustré sur les figures en raison de l'optimisation de sa simplicité de structure, il est proposé d'alimenter en carburant le moteur auxiliaire 4 au moyen d'un circuit fluidique auxiliaire 10 acheminant le carburant depuis chacune des nourrices principales 13,14 vers le moteur auxiliaire 4. Le circuit fluidique auxiliaire 10 comprend deux pompes auxiliaires 33,34 respectivement plongées dans les nourrices principales 13,14.

Les pompes auxiliaires 33,34 sont conjointement placées en communication fluidique avec un conduit auxiliaire 35 acheminant le carburant depuis l'une et l'autre des pompes auxiliaires 33,34 vers le moteur auxiliaire 4. En cas d'épuisement du carburant à l'intérieur de l'un quelconque des réservoirs principaux 11,12, l'approvisionnement en carburant du moteur auxiliaire 4 est maintenu à partir de l'autre des réservoirs principaux 11,12.

Le conduit auxiliaire 35 comprend notamment des canaux amont 36,37 respectivement affectés au prélèvement de carburant depuis l'un et l'autre des réservoirs principaux 11,12. Les canaux amont 36,37 sont chacun équipés d'une valve anti-retour 38,39 interdisant un passage d'air depuis un quelconque réservoir principal 11,12 épuisé en carburant vers le moteur auxiliaire 4 et/ou vers l'autre réservoir principal 11,12. Les canaux amont 36,37 sont placés conjointement en communication fluidique avec un canal aval 40 du conduit auxiliaire 35, ledit canal aval 40 acheminant le carburant depuis les canaux amont 36,37 vers le moteur auxiliaire 4.

## Revendications

1. Giravion bimoteur équipé d'une installation d'alimentation en carburant de moteurs à combustion (2,3,4) d'un groupe de motorisation (1) du giravion, ledit groupe de motorisation (1) fournissant une puissance mécanique exploitée pour l'entraînement d'organes consommateurs de puissance mécanique (5,6) du giravion par l'intermédiaire d'une chaîne de transmission de puissance mécanique,
lesdits organes consommateurs de puissance mécanique (5,6) comprenant :
-) au moins un rotor (5) dont au moins un rotor principal procurant au moins la sustentation du giravion, et
-) des organes auxiliaires (6), lesdits organes auxiliaires (6) excluant un quelconque rotor (5) du giravion participant à la sustentation, à la propulsion et/ou au guidage du giravion,
le groupe de motorisation (1) comprenant :
- ) deux moteurs principaux (2,3) à combustion dont les dimensionnements individuels leur confèrent une aptitude à entraîner individuellement ledit au moins un rotor (5) pendant une durée prédéfinie en cas de défection de l'un des moteurs principaux (2,3), et
- ) au moins un moteur auxiliaire (4) à combustion dont le dimensionnement lui confère une aptitude à entraîner lesdits organes auxiliaires (6) et une inaptitude à entraîner individuellement ledit au moins un rotor (5) en phase de vol du giravion,
ledit giravion étant **caractérisé en ce que** ladite installation d'alimentation en carburant comprend :
• des ensembles principaux d'alimentation en carburant (8,9) distincts les uns des autres en étant respectivement affectés aux moteurs principaux (2,3) pour leur alimentation individuelle en carburant, chaque ensemble principal d'alimentation en carburant (8,9) au moins comportant :
- un réservoir principal (11,12) de carburant et un circuit fluidique principal (27,28) comprenant au moins une pompe principale (29,30), le circuit fluidique principal (27,28) étant un circuit d'acheminement de carburant depuis une nourrice principale (13,14) équipant le réservoir principal (11,12) vers le moteur principal (2,3) auquel est affecté l'ensemble principal d'alimentation en carburant (8,9) considéré,
- un circuit de transfert principal (21,22) de carburant comprenant au moins une pompe de transfert principale (17,18 ; 19,20), le circuit de transfert principal (21,22) étant un circuit d'acheminement de carburant depuis le réservoir principal (11,12) vers la nourrice principale (13,14), la nourrice principale étant munie d'un déversoir (25,26) restituant un trop plein de carburant vers le réservoir principal (11,12),
• un ensemble auxiliaire d'alimentation en carburant comportant un circuit fluidique auxiliaire (10) comprenant deux pompes auxiliaires (33,34), le circuit fluidique auxiliaire (10) étant un circuit d'acheminement de carburant depuis chaque réservoir principal (11, 12) desdits ensembles d'alimentation principaux en carburant (8,9) vers le moteur auxiliaire (4),
et **en ce que** chaque réservoir principal (11,12) loge une desdites deux pompes auxiliaires (33,34), le circuit fluidique auxiliaire (10) étant un circuit d'acheminement de carburant vers le moteur auxiliaire (4) depuis l'un et l'autre des réservoirs principaux (11,12) par l'intermédiaire d'un conduit auxiliaire (35) en communication fluidique conjointe avec l'une et l'autre des pompes auxiliaires (33,34) respectivement logées dans les réservoirs principaux (11,12).

2. Giravion bimoteur selon la revendication 1,
**caractérisé en ce que** le conduit auxiliaire (35) comprend deux canaux auxiliaires amont (36,37) en communication fluidique respectivement avec l'une et l'autre des pompes auxiliaires (33,34), les canaux auxiliaires amont (36,37) étant conjointement en communication fluidique avec un canal auxiliaire aval (40) lui-même en communication fluidique avec le moteur auxiliaire (4).

3. Giravion bimoteur selon la revendication 2,
**caractérisé en ce que** chacun des deux dits canaux auxiliaires amont (36,37) est muni d'une valve anti-retour (38,39) interdisant un passage de fluide de l'un à l'autre des réservoirs principaux (11,12).

4. Giravion bimoteur selon l'une quelconque des revendications 1 à 3,
**caractérisé en ce que** les pompes auxiliaires (33,34) sont placées en fond des réservoirs principaux (11,12) qui leur sont respectivement affectés en excluant, de la composition de l'équipement de l'ensemble auxiliaire d'alimentation en carburant, une nourrice auxiliaire d'approvisionnement en carburant du moteur auxiliaire (4).

5. Giravion bimoteur selon l'une quelconque des revendications 1 à 3,
**caractérisé en ce que** les pompes auxiliaires (33,34) sont respectivement placées en fond des nourrices principales (13,14) équipant respectivement l'un et l'autre des réservoirs principaux (11,12), les capacités respectives des nourrices principales (13,14) étant chacune aptes à procurer pendant une durée prédéfinie un approvisionnement en carburant à la fois du moteur auxiliaire (4) et du moteur principal (2,3) alimenté en carburant depuis la nourrice principale (13,14) qui lui est affectée.

6. Giravion bimoteur selon l'une quelconque des revendications 1 à 3,
**caractérisé en ce que** les pompes auxiliaires (33,34) sont respectivement logées en fond de nourrices auxiliaires équipant respectivement l'un et l'autre des réservoirs principaux (11,12), les nourrices auxiliaires étant chacune approvisionnées en carburant depuis le réservoir principal (11,12) les logeant respectivement.

7. Giravion bimoteur selon la revendication 6,
**caractérisé en ce que** les nourrices auxiliaires sont approvisionnées en carburant depuis les réservoirs principaux (11,12) les logeant respectivement par l'intermédiaire de circuits de transfert auxiliaires respectifs distincts des circuits de transfert principaux.

8. Giravion bimoteur selon la revendication 6,
**caractérisé en ce que** les nourrices auxiliaires sont approvisionnées en carburant depuis les réservoirs principaux (11,12) les logeant respectivement par l'intermédiaire des circuits de transfert principaux (21,22) avec lesquels les pompes auxiliaires (33,34) sont en communication fluidique.

## Patentansprüche

1. Zweimotoriges Drehflügelflugzeug mit einer Einrichtung zur Kraftstoffversorgung von Verbrennungsmotoren (2, 3, 4) einer Antriebseinheit (1) des Drehflügelflugzeugs, wobei die Antriebseinheit (1) eine mechanische Leistung liefert, die zum Antrieb von Verbrauchereinheiten von mechanischer Leistung (5, 6) des Drehflügelflugzeugs über eine Übertragungskette mechanischer Leistung verwendet wird,
wobei die Verbrauchereinheiten (5, 6) mechanischer Leistung aufweisen:
-) mindestens einen Rotor (5) mit mindestens einem Hauptrotor, der mindestens den Auftrieb des Drehflügelflugzeugs erzeugt, und
-) Hilfselemente (6), wobei die Hilfselemente (6) jedweden Rotor (5) des Drehflügelflugzeugs ausschließen, der am Auftrieb, am Vortrieb und/oder an der Führung des Drehflügelflugzeugs beteiligt ist,
wobei die Antriebseinheit (1) aufweist:
-) zwei Hauptverbrennungsmotoren (2, 3), deren jeweilige Dimensionierung sie befähigt, alleine den mindestens einen Rotor (5) während einer vordefinierten Dauer im Fall eines Defektes eines der Hauptmotoren (2, 3) anzutreiben und
-) mindestens einen Hilfsverbrennungsmotor (4), dessen Dimensionierung ihm die Fähigkeit verleiht, die Hilfselemente (6) anzutreiben, und eine Unfähigkeit, alleine den mindestens einen Rotor (5) in der Flugphase des Drehflügelflugzeugs anzutreiben,
wobei das Drehflügelflugzeug **dadurch gekennzeichnet ist, dass** die Kraftstoffversorgungseinrichtung aufweist:
• Hauptkrafstoffversorgungseinheiten (8, 9), die voneinander verschieden sind und jeweils den Hauptmotoren (2, 3) für deren individuelle Kraftstoffversorgung zugeordnet sind, wobei jede Hauptkraftstoffversorgungseinheit (8, 9) mindestens aufweist:
- einen Hauptkraftstofftank (11, 12) und ein Hauptfluidleitungsnetz (27, 28), das mindestens eine Hauptpumpe (29, 30) aufweist, wobei das Hauptfluidleitungsnetz (27, 28) ein Kraftstoffzuleitungsnetz ist, das ausgehend von einem Hauptverteiler (13, 14), mit dem der Haupttank (11, 12) ausgerüstet ist, zu dem Hauptmotor (2, 3), dem die betreffende Hauptkraftstoffversorgungseinheit (8, 9) zugeordnet ist, führt,
- ein Hauptkraftstofffördernetz (21, 22), das mindestens eine Hauptförderpumpe (17, 18; 19, 20) aufweist, wobei das Hauptfördernetz (21, 22) ein Kraftstoffzuleitungsnetz von dem Haupttank (11, 12) zu dem Hauptverteiler (13, 14) ist, wobei der Hauptverteiler mit einem Überlauf (25, 26) versehen ist, der ein Zuviel an Kraftstoff zum Haupttank (11, 12) zurückführt,
• eine Hilfskraftstoffversorgungseinheit mit einem Hilfsfluidleitungsnetz (10), das zwei Hilfspumpen (33, 34) aufweist, wobei das Hilfsfluidleitungsnetz (10) ein Kraftstoffzufuhrleitungsnetz ist ausgehend von jedem Haupttank (11, 12) der Hauptkraftstoffversorgungseinheiten (8, 9) zu dem Hilfsmotor (4),
und dadurch, dass jeder Haupttank (11, 12) eine der beiden Hilfspumpen (33, 34) aufnimmt, wobei das Hilfsfluidleitungsnetz (10) ein Kraftstoffzufuhrleitungsnetz zu dem Hilfsmotor (4) ausgehend von dem einen und dem anderen der Haupttanks (11, 12) über eine Hilfsleitung (35) ist, die in gemeinsamer Fluidverbindung mit der einen und der anderen Hilfspumpe (33, 34) steht, die jeweils in den Haupttanks (11, 12) angeordnet sind.

2. Zweimotoriges Drehflügelflugzeug nach Anspruch 1,
**dadurch gekennzeichnet, dass** die Hilfsleitung (35) zwei stromauf gelegene Hilfskanäle (36, 37) aufweist, die jeweils in Fluidverbindung mit der einen und der anderen Hilfspumpe (33, 34) stehen, wobei die stromauf gelegenen Hilfskanäle (36, 37) zusammen in Fluidverbindung mit einem stromab gelegenen Hilfskanal (40) stehen, der selbst in Fluidverbindung mit dem Hilfsmotor (4) steht.

3. Zweimotoriges Drehflügelflugzeug nach Anspruch 2,
**dadurch gekennzeichnet, dass** jeder der zwei stromauf gelegenen Hilfskanäle (36, 37) mit einem Rückschlagventil (38, 39) versehen ist, das den Übergang von Fluid von einem Haupttank (11, 12) zum anderen verwehrt.

4. Zweimotoriges Drehflügelflugzeug nach einem der Ansprüche 1 bis 3,
**dadurch gekennzeichnet, dass** die Hilfspumpen (33, 34) auf dem Boden der Haupttanks (11, 12), denen sie jeweils zugeordnet sind, angeordnet sind unter Ausschluss eines Hilfskraftstoffversorgungsverteilers des Hilfsmotors (4) von der Zusammensetzung der Ausrüstung der Hilfskraftstoffversorgungseinheit.

5. Zweimotoriges Drehflügelflugzeug nach einem der Ansprüche 1 bis 3,
**dadurch gekennzeichnet, dass** die Hilfspumpen (33, 34) jeweils auf dem Boden von Hauptverteilern (13, 14) angeordnet sind, mit denen jeweils der eine und der andere Haupttank (11, 12) ausgerüstet ist, wobei die jeweiligen Kapazitäten der Hauptverteiler (13,14) jeweils in der Lage sind, während einer vorbestimmten Zeitdauer eine Kraftstoffversorgung sowohl des Hilfsmotors (4) als auch des Hauptmotors (2, 3), der von dem ihm zugeordneten Hauptverteiler (13, 14) mit Kraftstoff versorgt wird, zu gewährleisten.

6. Zweimotoriges Drehflügelflugzeug nach einem der Ansprüche 1 bis 3,
**dadurch gekennzeichnet, dass** die Hilfspumpe (33, 34) jeweils auf dem Boden von Hilfsverteilern angeordnet sind, mit denen jeweils der eine und der andere Haupttank (11, 12) ausgerüstet ist, wobei die Hilfsverteiler jeweils mit Kraftstoff von dem Haupttank (11, 12) versorgt werden, in dem sie jeweils angeordnet sind.

7. Zweimotoriges Drehflügelflugzeug nach Anspruch 6,
**dadurch gekennzeichnet, dass** die Hilfsverteiler von den Haupttanks (11, 12) mit Kraftstoff versorgt werden, in denen sie jeweils angeordnet sind, über jeweilige unterschiedliche Hilfsförderleitungsnetze der Hauptförderleitungsnetze.

8. Zweimotoriges Drehflügelflugzeug nach Anspruch 6,
**dadurch gekennzeichnet, dass** die Hilfsverteiler von den Haupttanks (11, 12) mit Kraftstoff versorgt werden, in denen sie jeweils angeordnet sind, über Hauptfördernetzleitungen (21, 22), mit denen die Hilfspumpen (33, 34) in Fluidverbindung stehen.

## Claims

1. A twin-engine rotorcraft equipped with a system for supplying fuel to combustion engines (2, 3, 4) of a power unit (1) of the rotorcraft, said power unit (1) providing a mechanical power that is used to drive mechanical power consuming members (5, 6) of the rotorcraft by way of a mechanical power transmission train, said mechanical power consuming members (5, 6) comprising:
- at least one rotor (5), including at least one principal rotor providing at least lift of the rotorcraft, and
- auxiliary members (6), said auxiliary members (6) excluding any rotor (5) of the rotorcraft that participates in lift, propulsion and/or steering of the rotorcraft,
the power unit (1) comprising:
- two principal combustion engines (2, 3), the individual dimensions of which make them suitable for driving individually said at least one rotor (5) for a predefined period in the event of the failure of one of the principal engines (2, 3), and
- at least one auxiliary combustion engine (4), the dimensions of which make it suitable for driving said auxiliary members (6) and unsuitable for driving individually said at least one rotor (5) during the flight phase of the rotorcraft,
said rotorcraft being **characterised in that** said system for supplying fuel comprises:
• principal units for supplying fuel (8, 9) that are distinct from one another, being respectively associated with the principal engines (2, 3) for supplying them individually with fuel, each principal unit for supplying fuel (8, 9) comprising at least:
- a principal fuel reservoir (11, 12) and a principal fluid circuit (27, 28) comprising at least one principal pump (29, 30), the principal fluid circuit (27, 28) being a circuit for routing fuel from a principal feeder (13, 14) with which the principal reservoir (11, 12) is equipped to the principal engine (2, 3) with which there is associated the principal unit for supplying fuel (8, 9) in question,
- a principal transfer circuit (21, 22) for transferring fuel, comprising at least one principal transfer pump (17, 18; 19, 20), the principal transfer circuit (21, 22) being a circuit for routing fuel from the principal reservoir (11, 12) to the principal feeder (13, 14), the principal feeder being equipped with an overflow (25, 26) that returns an excess of fuel to the principal reservoir (11, 12),
• an auxiliary unit for supplying fuel comprising an auxiliary fluid circuit (10) comprising two auxiliary pumps (33, 34), the auxiliary fluid circuit (10) being a circuit for routing fuel from each principal reservoir (11, 12) of said principal units for supplying fuel (8, 9) to the auxiliary engine (4),
and **in that** each principal reservoir (11, 12) houses one of said two auxiliary pumps (33, 34), the auxiliary fluid circuit (10) being a circuit for routing fuel to the auxiliary engine (4) from one and the other of the principal reservoirs (11, 12) by way of an auxiliary channel (35) that is in joint fluid communication with one and the other auxiliary pumps (33, 34), which are respectively housed in the principal reservoirs (11,12).

2. A twin-engine rotorcraft according to Claim 1, **characterised in that** the auxiliary channel (35) comprises two upstream auxiliary ducts (36, 37) that are respectively in fluid communication with one and the other of the auxiliary pumps (33, 34), the upstream auxiliary ducts (36, 37) being in joint fluid communication with a downstream auxiliary duct (40) that is itself in fluid communication with the auxiliary engine (4).

3. A twin-engine rotorcraft according to Claim 2, **characterised in that** each of the two said upstream auxiliary ducts (36, 37) is equipped with a nonreturn valve (38, 39) preventing fluid from passing from one to the other of the principal reservoirs (11, 12).

4. A twin-engine rotorcraft according to any one of Claims 1 to 3, **characterised in that** the auxiliary pumps (33, 34) are placed at the base of the principal reservoirs (11, 12) which are respectively associated with them, excluding from the construction of the equipment of the auxiliary unit for supplying fuel an auxiliary feeder for supplying fuel to the auxiliary engine (4).

5. A twin-engine rotorcraft according to any one of Claims 1 to 3, **characterised in that** the auxiliary pumps (33, 34) are respectively placed at the base of the principal feeders (13, 14) respectively equipping one and the other of the principal reservoirs (11, 12), the respective capacities of the principal feeders (13, 14) each being suitable for providing, for a predefined period, a supply of fuel to both the auxiliary engine (4) and the principal engine (2, 3) that is supplied with fuel from the principal feeder (13, 14) associated therewith.

6. A twin-engine rotorcraft according to any one of Claims 1 to 3, **characterised in that** the auxiliary pumps (33, 34) are respectively housed at the base of auxiliary feeders that respectively equip one and the other of the principal reservoirs (11, 12), the auxiliary feeders each being supplied with fuel from the principal reservoir (11, 12) that respectively houses them.

7. A twin-engine rotorcraft according to Claim 6, **characterised in that** the auxiliary feeders are supplied with fuel from the principal reservoirs (11, 12) that respectively house them by way of respective auxiliary transfer circuits that are distinct from the principal transfer circuits.

8. A twin-engine rotorcraft according to Claim 6, **characterised in that** the auxiliary feeders are supplied with fuel from the principal reservoirs (11, 12) that respectively house them by way of principal transfer circuits (21, 22) with which the auxiliary pumps (33, 34) are in fluid communication.
